# EUROPEAN PATENT APPLICATION

(11) **EP 3 750 703 A1**
(43) Date of publication of application: **16.12.2020**
(21) Application number: 20179692.7
(22) Date of filing: 12.06.2020
(51) Int. Cl.: B32B 1/00, B32B 3/30, B32B 5/08, B32B 15/14, B32B 27/42, C08K 7/02

(54) **MACHINABLE MOLDED FRETTING BUFFER**

(30) Priority: 13.06.2019 US 201962860937 P
(71) Applicant: Roller Bearing Company of America, Inc., Oxford, CT 06478 (US)
(72) Inventor: Loutzenheiser, Andrew, Tucson, AZ 85741 (US); Webb, James, Vail, AZ 85641 (US); Solomon, Joe, Lakewood, CA 90713 (US); McNeil, Scott, Gilford, NH 03249 (US); Gleason, Ryan, Tucson, AZ 85741 (US); Post, Jeffrey, Shelton, CT 06484 (US); Bertelsen, Owen, Marana, AZ 85653 (US)
(74) Representative: AWA Denmark A/S

(57) **Abstract**

A fretting buffer (100) includes a matrix (4), a plurality of reinforcing fibers (2), and a lubricant (6) disbursed substantially homogeneously in the matrix (4).

## Description

### Cross-Reference to Related Application

This application claims the benefit of U.S. Provisional Patent Application Serial No. 62/860,937 filed on June 13, 2019, the entirety of which is incorporated herein by reference in its entirety.

### Technical Field

The present invention is directed to a homogeneous fiber reinforced fretting buffer that protects faying surfaces of both non-ferrous and ferrous material, from succumbing to fretting damage such as fretting corrosion, fretting wear, or fretting pitting that may result from contact between materials under load.

### Background

Fretting refers to wear and sometimes corrosion damage at the asperities of contact surfaces. This damage is induced under load and in the presence of repeated relative surface motion, as induced for example by vibration. Fretting can be defined as a special wear process that occurs at the contact area between two materials under load and subject to minute relative motion by vibration or some other force. Fretting tangibly downgrades the surface layer quality producing increased surface roughness and micro pits, which reduces the fatigue strength of the components, and can lead to catastrophic failure of materials under load.

The contact movement causes mechanical wear and material transfer at the surface, often followed by oxidation of both the metallic debris and the freshly exposed metallic surfaces. Because the oxidized debris is usually much harder than the surfaces from which it came, it often acts as an abrasive agent that increases the rate of fretting.

To reduce or eliminate fretting, a fretting buffer can be used to protect or shield a structure from the detrimental effects of fretting.

One particular need is to eliminate fretting damage in aircraft applications, for example between the aluminum/titanium fuselage sections that are connected in the assembly of an aircraft. Another such need is elimination of fretting damage between engine nacelle panels and sections of jet turbine engines. These structures, which must be light weight, are prone to flexing and strain which can result in wear and fatigue damage to the nacelle.

An engine nacelle acts as a cover to streamline airflow over a jet engine and is also a structure element surrounding the jet engine. The nacelle must be modular for assembly and for access to the engine for maintenance. Nacelles typically have doors that open on the cylindrical sides that need to close tightly and mate with a streamlined nose section of the nacelle. For example, the doors may take the form of clamshell cowls that have tongue-in-groove connections that seal and secure opposing sections of the cowls to one another. The interface at the tongue-in-groove connection is subject to vibratory loads that are known to cause fretting at the interfacing surfaces. The grooves and tongue portions are typically V-shaped or U-Shaped circumferential channels that have a bottom and two opposing side walls. Typically there are arcuate junctions between each side wall and the bottom of the channel. Efforts to install fretting buffers in the grooves and in particular on the arcuate junctions have required them to be installed in three segments (i.e., on each of the walls and on the bottom). Such a three piece configuration employed a fillet to join each of the buffers on the side walls to the buffer on the bottom of the channel. This configuration created a void under the fillet and between the arcuate junctions and leaving the arcuate junctions with no buffer attached thereto. Such prior art arrangements, are time consuming and difficult to install and do not address fretting problems on the arcuate junctions. In addition, the post installation condition (e.g., wear and thickness) of prior art buffers is difficult to determine because edges of the buffer, for example at the arcuate junctions, are covered by the fillets. Furthermore, prior art buffers tend to have accelerating wear processes because of wear debris accumulating on the buffer and acting as an abrasive that increases wear of the buffer.

Displacement and strains from flight loads and temperature variations cause movement between the nacelle sections. A nacelle can be quite large on today's by-pass engines also called two stream engines. The inlet diameters on nacelles can range from approximately 10 inches to over 100 inches, or larger. The nacelles are typically manufactured from lightweight materials such as aluminum alloys (2024, 6061, 7050 families, etc.) and Titanium alloys (6Al-4V, 6A1-2Sn-4Mo-2Sn, etc.), and composite materials. The aluminum and titanium alloys are prone to galling, fretting and abrasive wear failure where they are in intimate contact on faying surfaces.

The complex shape of nacelles and wing designs and overall loading on the engine can lead to non-symmetrical loading on nacelles, thus the wear or fretting damage will not be consistent all the way around the nacelle.

Based on the foregoing, there is a need to provide a fretting buffer that can be easily formed into the shape of clips, springs, pads, rails and gasket materials and can easily be fit between sections of nacelle panels and on arcuate or curved surfaces to prevent wear and fretting damage.

### Summary

There is disclosed herein a fretting buffer. The fretting buffer includes a matrix, a plurality of reinforcing fibers, and a lubricant. The plurality of reinforcing fibers and the lubricant are disbursed substantially homogeneously in the matrix.

There is disclosed herein a fretting buffer that includes a matrix that includes a phenolic resin. The fretting buffer includes a plurality of reinforcing fibers, for example, polyester fibers or felted polyester fibers. The plurality of reinforcing fibers are disbursed substantially homogeneously in the phenolic resin matrix. The fretting buffer includes a lubricant, for example, a polytetrafluoroethylene material. The lubricant is disbursed substantially homogeneously in the matrix.

In one embodiment, the matrix is a resin selected from the group consisting of epoxies, silicates, nitriles, polyimides, phthalates, and combinations thereof.

In a particular embodiment, the matrix is a phenolic resin.

In some embodiments, the plurality of reinforcing fibers is selected from the group consisting of aramids, glasses, carbons, PEEKs, thermoplastics, ceramics, and combinations thereof.

In certain embodiments, the plurality of reinforcing fibers is a plurality of felted polyester fibers.

In some embodiment, the lubricant is PTFE.

In yet other embodiments, the lubricant includes at least one of PTFE fibers and PTFE whiskers.

In some embodiments, the fretting buffer is formed in a sheet or strip shape.

In some embodiments, the fretting buffer includes a bonding side having at least one slot extending therein to accommodate conformation of the fretting buffer to arcuate surfaces.

In some embodiments, the bonding side has at least two slots extending therein to accommodate conformation of the fretting buffer to arcuate surfaces, the at least two slots intersecting one another.

In some embodiments, the fretting buffer includes a wear side having at least one slot extending therein to accommodate conformation of the fretting buffer to arcuate surfaces.

In some embodiments, the wear side has at least two slots extending therein to accommodate conformation of the fretting buffer to arcuate surfaces, the at least two slots intersecting one another.

In some embodiments, the fretting buffer includes a sheet or strip configured to continuously cover, conform to, be adhered to or be a wear surface over an arcuate surface.

In other embodiments, the fretting buffer include debris slot for capturing a wear particle or a contaminant.

In some other embodiments, the fretting buffer includes a wear indicator.

In a particular embodiment, the wear indicator is a slot disposed partially through the thickness of the fretting buffer.

In some embodiments, the fretting buffer includes a colorant.

In another aspect, a method of protecting a structure from fretting is disclosed. The method includes the steps of attaching a fretting buffer to a first mating surface of a first structure and mating the first mating surface with a second mating surface of a second structure. The fretting buffer is disposed (e.g., sandwiched) between the first mating surface and the second mating surface.

In one embodiment of this aspect the fretting buffer is adhesively bonded to the first mating surface.

In some embodiments, the first structure is a first nacelle component and the second structure is a second nacelle component.

In a particular embodiment, the second structure includes a polyurethane based PTFE filled coating disposed on the second mating surface.

In some embodiments, the second mating surface includes a non-chromate treated metal.

In some embodiments, the second mating surface includes at least one of a bare metal, a plated metal, a high velocity oxygen fuel (HVOF) coated surface, and a ceramic coated surface.

In another aspect, a fretting buffer includes a phenolic resin matrix. A plurality of felted polyester reinforcing fibers is disbursed substantially homogeneously in the phenolic resin matrix. A polytetrafluoroethylene (PTFE) lubricant is disbursed substantially homogeneously in the phenolic resin matrix.

In some embodiments of this aspect, the fretting buffer includes a colorant. The colorant can be disbursed substantially homogeneously in the resin matrix to form a predetermined color which substantially matches the predetermined color of an aircraft structure.

### Brief Description of the Drawings

FIG. 1 is an isometric view of one non-limiting embodiment of the fretting buffer.
FIG. 2 is a cross sectional view of the fretting buffer conformed to a complex curve.
FIG. 3A is a plan view of a slotted fretting buffer shown in the as manufactured state.
FIG. 3B is a plan view of the slotted fretting buffer shown with the conformed state superimposed over the slotted buffer of FIG. 3A and conformed over a convex surface.
FIG. 3C is an enlarged view of detail 3C of the slotted fretting buffer of FIG. 2 shown in a conformed state and conformed over a convex surface.
FIG. 3D is an enlarged view of detail 3D of FIG. 3C.
FIG. 3E is an enlarged view of detail 3E of FIG. 3C.
FIG. 4 is a cross sectional view of a fretting buffer including wear indicators.
FIG. 5 is a cross section view of the fretting buffer of FIG. 1 as assembled between engine nacelle components.
FIG. 6 is another embodiment of the fretting buffer of FIG. 1 showing slots therein.

### Detailed Description

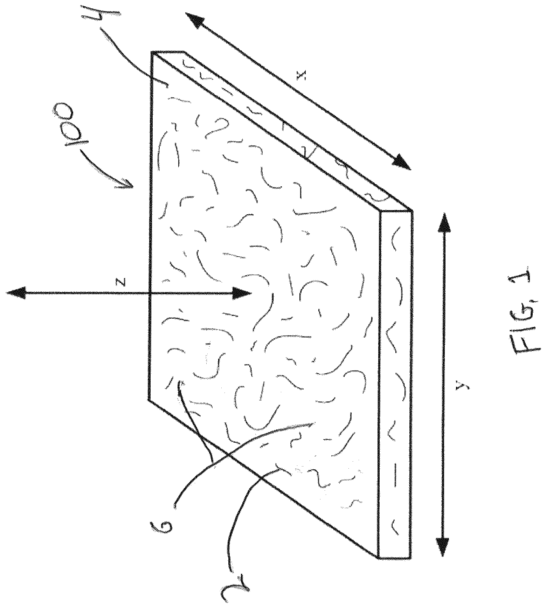

As shown in FIG. 1, the fretting buffer 100 is a substantially homogeneous fiber reinforced composite material that protects faying surfaces from succumbing to fretting damage such as fretting corrosion, fretting wear, fretting pitting, etc.

The fretting buffer 100 includes a plurality of reinforcing fibers 2 dispersed throughout a matrix, such a resin, 4. The matrix or resin system 4 is infused between and encapsulates the plurality of reinforcing fibers 2. In one embodiment, the fretting buffer 100 and matrix 4 are formed into a sheet.

The plurality of reinforcing fibers 2 are manufactured from a material such as fiberglass, polyethylene terephthalate (sometimes written poly(ethylene terephthalate)), commonly abbreviated PET, PETE, polyester, cotton, a meta-aramid material, polytetrafluoroethylene (PTFE) and/or a para-aramid synthetic material. The matrix or resin system includes polyester, epoxy, phenolic, urethane, polyimide and/or polyamide material, other thermoplastic or thermoset polymers, composites, ceramics or metals.

In one embodiment, a lubricant 6 is dispersed throughout the matrix 4. The lubricant 6 can include a plurality of lubricating fibers, whiskers, or nano-particles manufactured from a polytetrafluoroethylene (PTFE) material, a nylon, and/or a graphite. The lubricant 6 can be PTFE, polypropylene, polyethylene, acetal, graphite, nylon, molybdenum disulfide, boron nitride, a low-surface-energy plastic or a combination of any of these materials

In one embodiment, the fretting buffer 100, in a low abrasive form, the plurality of reinforcing fibers 2 is polyester based non-woven felt which can be used against bare aluminum alloy such as 2000 series (2024, 2014 for example), 6000 series (6061 for example) and 7000 series aluminum (7050, 7075 for example), titanium alloys (6Al-4V, 10-2-3, 5-5-5-5-3, 6-2-4-2), and CRES alloys (17-4PH, 15-PH, 13-8PH, nitronic 60), or superalloys such as Inconel718, 625, and A286. Additionally, the low abrasion fretting buffer 100 can be used against a PTFE filled polyurethane top coat anti-chafe paint as discussed below.

In some embodiments, the lubricant 6 in the fretting buffer 100, includes non-woven polytetrafluoroethylene (PTFE) fibers or whiskers that make it more creep resistant than known machinable PTFE self-lubricating systems. Additionally, known non-woven liners require metal backing whereas the instant fretting buffer 100 can stand alone as a bearing surface, can be formed into a shape by hand pressure, and can provide a low friction surface capable of wearing against metallic surfaces and polyurethane PTFE painted surfaces.

In some embodiments, the fretting buffer 100 is manufactured as a composite sheet that is substantially homogenous and machinable. By machining standard strips or sheets of the fretting buffer 100, economies of scale are realized thereby lowering costs for manufacture and reduce the number of parts to carry in inventory, permitting a "one size fits all" approach. The fretting buffer 100 is scalable in size and shape (e.g., sheets, strips, etc.), and can be produced for parts from about 3/16 inches to about 10 feet and greater. Large hoops or other shapes can be made in one-piece, multiple pieces or laminate sheets or strips because the fretting buffer 100 can be mechanically assembled or laminated. The fretting buffer 100 can be manufactured in the form of a rectangular flat sheet having a width x, a length y and a thickness z. Thicknesses of the fretting buffer can be from about 0.020 inches to 0.100 inches or greater.

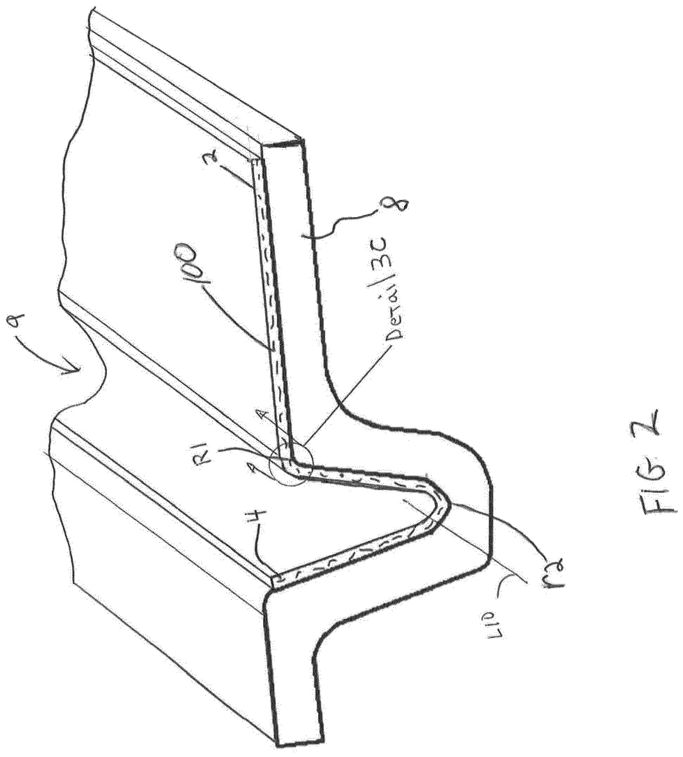

The fretting buffer 100 is semi-rigid and yet flexible enough to allow it to conform to the irregular or curved surfaces. As shown in FIG. 2, the fretting buffer 100 can be formed into or onto both inside radii R2 of curvature and outside radii R1 of a structural component 8 having a V-shaped groove 9 formed therein, while maintaining a required thickness (t). Relief slots 10 as discussed herein can be machined into the fretting buffer 100 to provide strain relief and additional flexibility for increased conformation to the inside radii R2 of curvature or outside radii of curvature R1. The fretting buffer 100 is semi- rigid but retains a springy quality such that it can be used as a retention device in a spring retention system by forming it into a spring shape. The fretting buffer 100 is configured to be applied to flat surfaces, arcuate linear extending surfaces and/or surfaces with three dimensional contours such as convex or concave spherical shaped surfaces. The fretting buffer 100 is configured to continuously cover, be adhered to or wear against arcuate surfaces without the need to join individual pieces together with fillets for example.

The fretting buffer 100 can be mechanically retained and secured to the faying surface a structural component 8 or to any material requiring protection from fretting. The fretting buffer 100 can be secured using screws, rivets, nuts, nails, and the like, or can bonded with adhesives such as epoxies, phenolic resins, vinyl phenolic resins, acrylate-based adhesives, as well as other thermoset and thermoplastic resins. In addition, the fretting buffer 100 can be bonded directly to a substrate using its internal resin system or matrix 4.

The fretting buffer 100 is sufficiently tough thus preventing crack propagation should holes, slots and unique cut outs be employed to facilitate mounting.

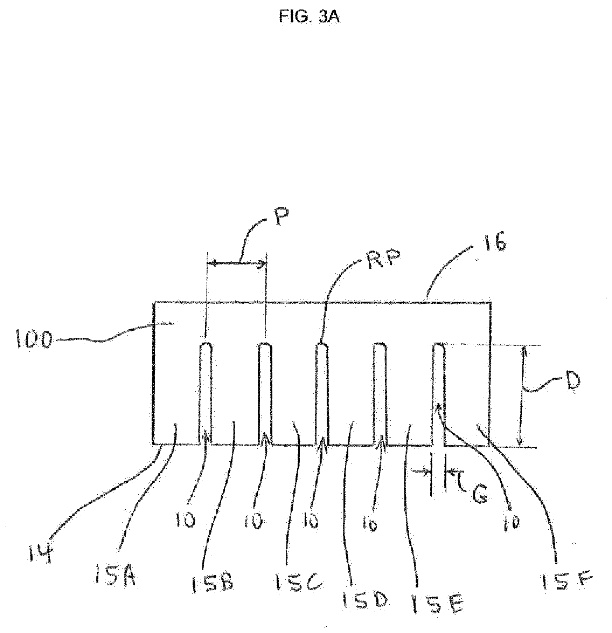

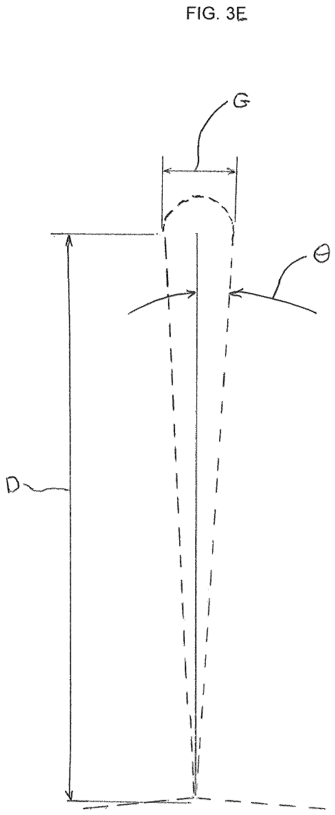

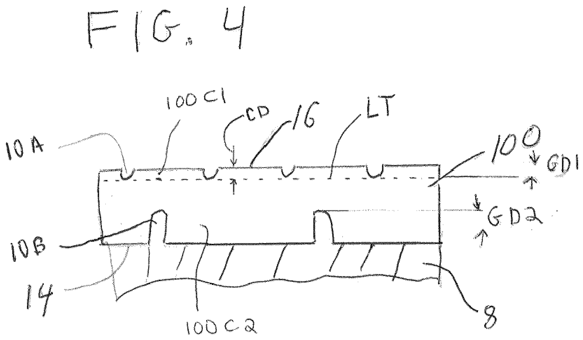

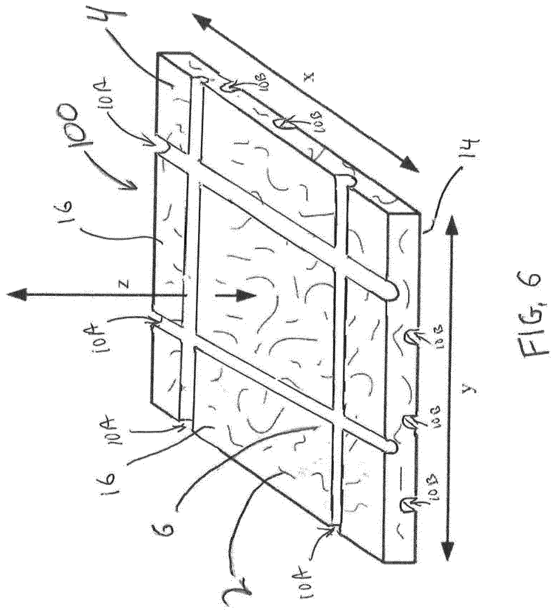

As shown in FIG. 3A the fretting buffer 100 has a slot 10 formed into the bonded side 14 of the fretting buffer 100 between leg 15A and leg 15B, a slot 10 formed between leg 15B and leg 15C, a slot 10 formed between leg 15C and leg 15D, a slot 10 formed between leg 15D and leg 15E, and a slot 10 formed between leg 15E and leg 15F. While the slots 10 are shown and described as being formed in the bonding side the present invention is not limited in this regard as the slots 10 may also be formed in the wear side 16, as shown in FIGS. 4, 5 and 6. As shown in FIG. 6, the slots 10 on the wear side 16 intersect one another (e.g., are oriented at an angle to one another and intersect at a junction therebetween) and the slots 10 on the bonding side 14 intersect one another (e.g., are oriented at an angle to one another and intersect at a junction therebetween) to accommodate conformation to three dimensional inside and outside radii of curvature such as convex and concave spherical shaped surfaces. The slots 10 are serrations or cut outs in certain regions, such as the top, bottom, sides, or combinations thereof, the fretting buffer can be readily formed to follow unique contours. The slots 10, depending where they are placed and how large they are, can also create a safety or replacement wear indicator either by their appearance or disappearance when the fretting buffer 100 material is abraded or worn away as discussed herein. The fretting buffer 100 can be machined through use of manual and CNC controlled techniques such as mills, lathes, water jet, etc. allowing the material to be modified to any desirable shape. The slots 10 can be milled or cut with a slitting wheel. The fretting buffer 100 is capable of being machined dry or with water soluble coolants using the following machining parameters: insert radius about 0.030-inch, surface speed of about 1000 SFM or higher; feed rate about .001/.003 inch per revolution. In one embodiment, the slots 11 run parallel to a longitudinal axis L10 of the V-shaped groove 9 in the structural component 8 and extend outwardly substantially perpendicular to a tangent of the outside radii of curvature R1 or inside radii of curvature R2.

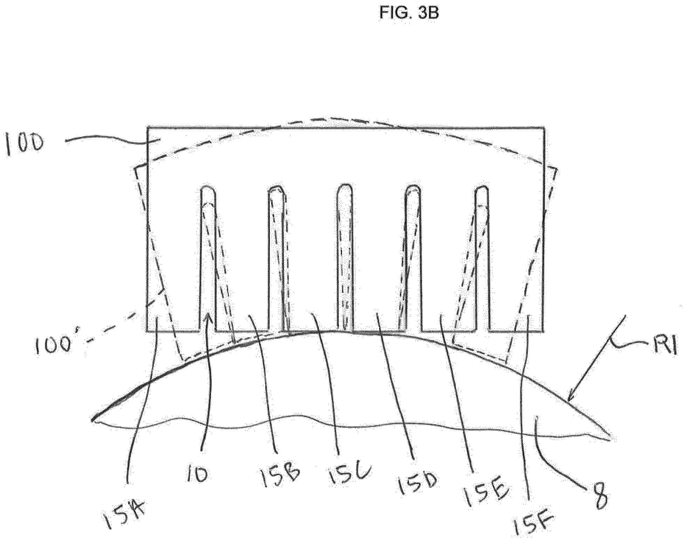

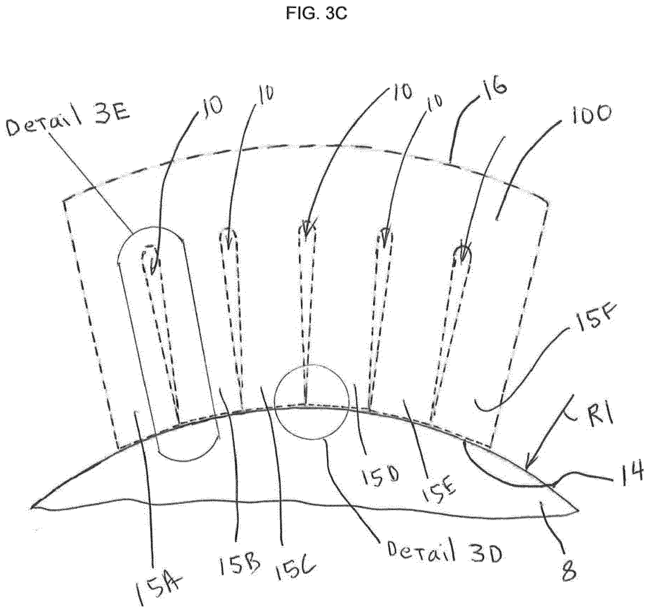

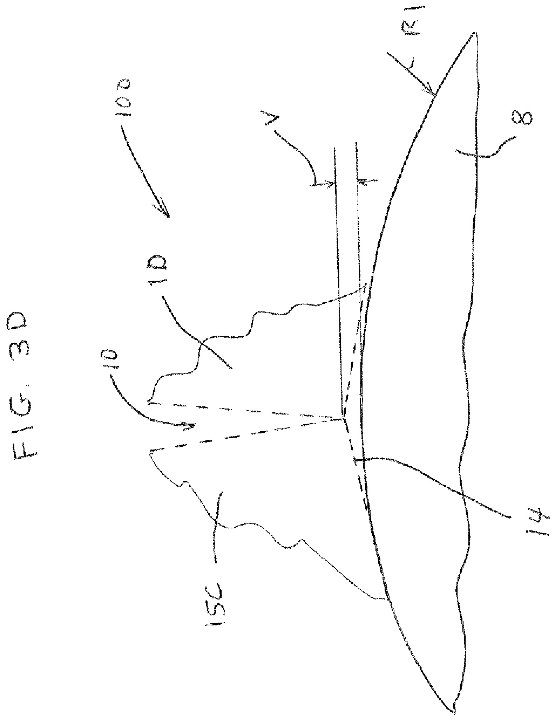

One such formula for calculating the slot detail to permit forming of the fretting buffer 100 on an outside radius R1 is shown in FIGS. 3A-3E. Referring to FIG 3A, a fretting buffer 100, slots 10 can be formed by machining. A pitch distance P is defined as the distance between centerlines of the slots 10. A gap G is defined by the width of each slot 10. A depth D is defined as the depth of each of the slots 10. The slots 10 include a radiused portion RP. As shown by the dashed lines in FIG. 3B, the slots 10 are formed to allow the fretting buffer 100 to conform to the outside radius R1. The outside radius R1 can be a portion of any structure or material requiring protection of a faying surface. Figures 3C and 3D illustrate the fretting buffer as fitted to the outside radius R1.

In this example, calculations are performed for an outside radius R1 equal to1.000 in., a gap width G of 0.03 in., and a slot depth of 0.25 in. The angle θ, as shown in FIG. 3F, defines the angle required to close the gap G and can be calculated as the θ = arctan (G/2D). The pitch distance P can be calculated as P= 2R1 tan (θ) + G. Further, a void height V as shown in FIGS. 3D can be calculated as V= ((P-G)/2) sin (θ). For this case, θ = 3.4336 degrees, P = 0.15 inches and V= 0.0018 inches.

The slotting/serration details can be changed to readily accommodate varying thicknesses and layers of the fretting buffer 100. As shown in FIG. 4, the fretting buffer 100 can include slots 10A on the wear side 16 or slots 10B on the bonded side 14 of the fretting buffer or both. The slots 10A include a slot depth GD1 and the slots 10B have a slot depth GD2. The slot depths GD1 and GD2 are predetermined based on the requirements of any particular application. For example, slots 10A in the wear surface 16 can be sized such that when one or more of the slots 10A disappear or is less than a specified depth, the fretting buffer must be replaced. Likewise, slots 10B in the bonding surface 14 are sized to indicate replacement when the slot 10B becomes apparent in the wear surface 16.

The fretting buffer 100 can be applied to virtually any faying surface that requires protection from fretting due to applied loads. One particular application is for engine nacelle components 200 used to house a jet engine. The fretting buffer 100 acts to isolate the sections of engine nacelle panels and sections of a jet turbine engine which are prone to flexing and varying degrees of strain which result in wear and fatigue damage to the nacelle.

The fretting buffer 100 of the present invention is configured to be employed and installed in flat and arcuate mating surfaces (e.g., tongue-in-groove) of various aircraft components such as inlet cowls, fan cowls, thrust reversers, exhaust cones, exhaust nozzles, and pylons for housing jet engines. The fretting buffer 100 can be applied to stop fretting damage between any of the components which are susceptible to wear and fretting, for example, on the mating surfaces of the inlet cowl, or the mating surfaces of the fan cowl. The fretting buffer can also be applied, for example to mating surfaces which come into intimate contact when the inlet cowl is attached to the fan cowl. Likewise, other sections of the nacelle can be mated with the fretting buffer applied to one or both mating surfaces. Further, aluminum/titanium fuselage sections that are connected in the assembly of an aircraft can be protected from fretting by application of the fretting buffer to any mating surface that is susceptible to fretting.

Attempts to prevent fretting between the mating parts of an engine nacelle, manufactured from the same or different alloys have utilized polyurethane PTFE filled paints. These PTFE filled paints may resist chafing, but are not intended nor capable of sustaining high fretting and galling stresses caused by the flight loads on the engine nacelle. The non-woven, PTFE filled, and reinforced fretting buffer 100 can operate at stress levels 2500 psi and be uses to wear against polyurethane PTFE filled paints as well as metallic surfaces, at stress levels up to 25,000 psi.

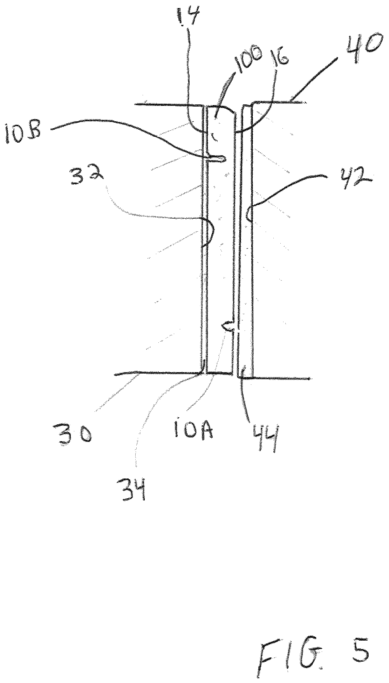

The superior wear rate of the non-woven PTFE filled fretting buffer 100 is shown in FIG. 6, fretting buffer against polyurethane PTFE filled paint wear graph. The test simulated a siding motion of +/-0.025 inch (0.100 in. total travel). The low abrasion non-woven PTFE filled fretting buffer 100 wore only 0.0009 inch of the polyurethane PTFE filled paint. Advantageously, using a fretting buffer 100 that can run against paint provides for an additional layer of corrosion protection. Additionally, paint may be used on aluminum alloys rather than chemical conversion coatings that use hazardous chromate solutions, thus eliminating waste and reducing cost. 1. Referring to FIG. 5, a first nacelle component 30 has a first mating surface 32. In this example, the fretting buffer 100, including wear slots 10A and bonding side 14 is bonded to the first mating surface 32 using a structural adhesive 34. A second nacelle component 40 having a second mating surface 42, is coated with a polyurethane based PTFE filled paint 44. The first nacelle component 30 and the second nacelle component 40 are mounted in a fixed position such that the wear surface 16 the fretting buffer 100 contacts the polyurethane based PTFE filled paint 44 act as faying surfaces against one another. In some embodiments, the second mating surface 42 is a bare metal. However, the present invention is not limited in this regard as the second mating surface 42 may be a plated metal, coated with a high velocity oxygen fuel (HVOF) process or ceramic coated.

In some embodiments, the fretting buffer 100 is capable of accepting a colorant, such as a dye or a pigment to match the existing color scheme of an airplane structure. The dye or pigment may be in the form of a liquid or powder that binds to the fretting buffer material in order to form a predetermined color. By coloring the fretting buffer 100, costs can be reduced and the need for additional painting to match the aircraft structure may be unnecessary. The colorant can be disbursed to form a homogeneous color throughout the structure of the fretting buffer, or can be added to form one or more layers of a predetermined color having one or more predetermined thicknesses. In one embodiment, different colorants are used at various thickness of the fretting buffer 100. For example, referring to FIG. 4, a first colorant 100C1 may be employed at a layer or thickness CD on one side of the dashed line LT, of the fretting buffer 100 at the wear surface 16 and to a first predetermined depth CD from the wear surface 16 to match the existing color scheme of an airplane structure. A second colorant 100C2 may be employed at a second predetermined depth from the wear surface 16 to the bonding surface 14. The second predetermined depth is selected based upon a maximum wear depth. Thus, the second colorant 100C2 is configured as a wear indicator of the fretting buffer 100. While two colorants 100C1 and 100C2 are described, the present invention is not limited in this regard as more than two colorants or gradients of colorant may be employed.

Although this invention has been shown and described with respect to the detailed embodiments thereof, it will be understood by those of skill in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention not be limited to the particular embodiments disclosed in the above detailed description, but that the invention will include all embodiments falling within the scope of the appended claims.

## Claims

1. A fretting buffer (100) comprising:
a matrix (4), the matrix (4) comprising a phenolic resin;
a plurality of reinforcing fibers (2), the plurality of reinforcing fibers (2) comprising polyester fibers, preferably felted polyester fibers, and the plurality of reinforcing fibers being disbursed substantially homogeneously in the phenolic resin matrix; and
a lubricant (6), the lubricant comprising polytetrafluoroethylene, preferably polytetrafluoroethylene fibers or polytetrafluoroethylene whiskers, the lubricant (6) being disbursed substantially homogeneously in the matrix (4).

2. The fretting buffer (100) of claim 1, wherein the matrix (4) comprises a resin selected from the group consisting of epoxies, silicates, nitriles, polyimides, phthalates, and combinations thereof.

3. The fretting buffer (100) of claim 1, wherein the plurality of reinforcing fibers (2) is selected from the group consisting of aramids, glasses, carbons, PEEKs, thermoplastics, ceramics, and combinations thereof.

4. The fretting buffer (100) of claim 1, further including a debris slot (10) for capturing wear particles or a contaminant.

5. The fretting buffer (100) of claim 1, further including a wear indicator, the wear indicator being at least one of a slot and (b) a colorant, disposed partially through a thickness of the fretting buffer (100).

6. The fretting buffer (100) of claim 1, further comprising at least one colorant, the at least one colorant being disbursed substantially homogeneously in the phenolic resin matrix to form a predetermined color which substantially matches a predetermined color of an aircraft structure.

7. The fretting buffer (100) of claim 1, comprising a bonding side (14) having at least one slot (10, 10B) extending therein to accommodate conformation of the fretting buffer (100) to arcuate surfaces.

8. The fretting buffer (100) of claim 1, comprising a wear side (16) having at least one slot (10, 10A) extending therein to accommodate conformation of the fretting buffer (100) to arcuate surfaces.

9. The fretting buffer (100) of claim 1, wherein the matrix or the fretting buffer (100) comprise a sheet or strip configured to continuously cover, conform to, be adhered to or be a wear surface over flat surface or an arcuate surface.

10. A method of protecting a structure from fretting comprising:
providing the fretting buffer (100) of any of the preceding claims;
attaching the fretting buffer (100) to a first mating surface (32) of a first structure; and mating the first mating surface with a second mating surface (42) of a second structure, wherein the fretting buffer (100) is disposed between the first mating surface (32) and the second mating surface (42).

11. The method of claim 10, wherein the fretting buffer (100) is adhesively bonded to the first mating surface (32).

12. The method of claim 10, wherein the first structure is a first nacelle component (30) and the second structure is a second nacelle component (40).

13. The method of claim 10, wherein the second structure includes a polyurethane based polytetrafluoroethylene filled coating disposed on the second mating surface (42).

14. The method of claim 10, wherein the second mating surface (42) comprises at least one of a bare metal, a plated metal, a high velocity oxygen fuel coated surface, and a ceramic coated surface.
